# EUROPEAN PATENT APPLICATION

(11) **EP 4 826 272 A1**
(43) Date of publication of application: **21.10.2026**
(21) Application number: 24902917.4
(22) Date of filing: 12.12.2024
(51) Int. Cl.: F16D 65/14, B60T 13/74

(54) **LOCKING MECHANISM, CONTROL METHOD OF LOCKING MECHANISM, MOTOR GEAR UNIT, AND VEHICLE**

(30) Priority: 13.12.2023 CN 202311711837; 13.12.2023 CN 202323398926 U
(71) Applicant: Bethel Automotive Safety Systems Co., Ltd., Wuhu, Anhui 241009 (CN); Shanghai Lixiang Automobile Co., Ltd., Shanghai 201805 (CN)
(72) Inventor: GUO, Fengliang, Wuhu, Anhui 241009 (CN); YE, Yixing, Wuhu, Anhui 241009 (CN); ZHAO, Licheng, Wuhu, Anhui 241009 (CN); YAN, Guanghui, Wuhu, Anhui 241009 (CN); ZHU, Yuancheng, Wuhu, Anhui 241009 (CN); TANG, Lin, Wuhu, Anhui 241009 (CN); LI, Yundong, Wuhu, Anhui 241009 (CN); CHEN, Yan, Shanghai 201805 (CN); LI, Shipeng, Shanghai 201805 (CN); SUN, Hongpeng, Shanghai 201805 (CN)
(74) Representative: Canzler & Bergmeier Patentanwälte Partnerschaft mbB
(86) International application number: PCT/CN2024/138889
(87) International publication number: WO 2025/124500

(57) **Abstract**

Disclosed in the present invention is a locking mechanism, comprising an electromagnet and a multi-stage gear transmission mechanism. A locking head of the electromagnet is configured to be embedded during a locking state into a locking recess formed in any gear of the multi-stage gear transmission mechanism, a locking face and a non-locking face are provided in the locking recess, and the distance between the locking face and the non-locking face is greater than the width of the locking head. According to the present invention, the locking mechanism provided with the locking recess structure which is long and wide can ensure the effectiveness of a locking action of a bistable electromagnet, and when the locking head enters the locking recess, there is open space in the front, back, left, and right directions, not obstructing the movement of the locking head, thereby ensuring the effective axial movement of the locking mechanism, canceling a position detection sensor, simplifying module parts, thus reducing the manufacturing cost. Also disclosed in the present invention are a motor gear unit, a control method of the locking mechanism, and a vehicle.

## Description

### FIELD OF TECHNOLOGY

The present disclosure relates to the technical field of brake systems, and more particularly, to a locking mechanism, a control method for the locking mechanism, a motor gear unit, and a vehicle.

### BACKGROUND

With the electrification transformation of vehicles, brake-by-wire systems have gradually become a major development trend in the automotive industry. As one type of brake-by-wire system, an electromechanical brake (EMB) system adopts a wheel-end motor direct-drive configuration, converts torque and rotational movement of a motor into thrust and translational movement of a connecting member through a motion conversion mechanism, and pushes a brake pad to clamp a brake disc, thereby obtaining braking force. In addition, as an emerging brake system, the electromechanical brake eliminates bulky components such as a vacuum booster and hydraulic pipelines, so that chassis layout of the vehicle is simpler and more flexible, and the electromechanical brake has advantages of fast and accurate pressure regulation and can significantly improve braking performance of the vehicle.

In existing EMB brake caliper technical solutions, each brake caliper structure has a locking mechanism. One locking mechanism adopts an electromagnet as a locking power device. Extension and retraction of a locking head of the electromagnet are used to pin and unlock power transmission, thereby locking the entire parking system. However, a bi-stable electromagnet itself has the characteristic of fast action, and, during execution of the entire locking action, only two initial positions can be held. Therefore, an action state of the bi-stable electromagnet may be stuck at any position.

Chinese Patent Publication No. CN218598679U discloses a parking brake locking device. In the parking brake locking device, a plurality of bosses protrude from an end surface of a gear to cooperate with a head of an electromagnet push rod to implement a locking function. Due to existence of parking clamping force, strength of the bosses involves risk. In addition, because action of the electromagnet is instantaneous, directly pinning the system by the electromagnet may cause a risk of ineffective locking. Therefore, an additional position detection system is required to determine a position state of the locking head. However, because structural arrangement of the parking brake locking device is very compact, there is no corresponding arrangement space around the parking brake locking device for arranging the position detection system. Moreover, the position detection system requires a connector for signal transmission, and there is no space for arranging the connector. Thus, arrangement of the position detection system is difficult.

### SUMMARY

The present disclosure discloses a locking mechanism to ensure effectiveness of a locking action of a bi-stable electromagnet, simplify components of the mechanism, and reduce manufacturing cost.

The present disclosure provides a locking mechanism including an electromagnet and a multi-stage gear transmission mechanism. A locking head of the electromagnet is configured, in a locked state, to be fitted into one of locking slots provided in any one gear of the multi-stage gear transmission mechanism. Each of the locking slots is provided with a locking surface and a non-locking surface. A distance between the locking surface and the non-locking surface is greater than a width of the locking head.

The locking head is provided with a first contact surface configured to contact the non-locking surface and a second contact surface configured to contact the locking surface, and in the locked state, the second contact surface remains in contact with the locking surface.

The first contact surface on the locking head and the non-locking surface of each of the locking slots are configured for matching planar contact and/or matching inclined-surface contact. The first contact surface on the locking head and the non-locking surfaces of the locking slots may be inclined surfaces, planar surfaces, or a combination of planar and inclined surfaces.

The locking slots are provided on an end surface of the gear, and all of the locking slots are uniformly distributed in a circumferential direction on the end surface of the gear.

The locking slots are provided on an outer circumferential surface of the gear, and all of the locking slots are uniformly distributed in a circumferential direction on the outer circumferential surface of the gear.

The gear is a driven gear of a first-stage transmission mechanism in the multi-stage gear transmission mechanism.

The multi-stage gear transmission mechanism includes the first-stage transmission mechanism and a second-stage transmission mechanism. A driving gear of the first-stage transmission mechanism is connected to a motor. The driven gear of the first-stage transmission mechanism is connected to a driving gear of the second-stage transmission mechanism to form a compound gear. A driven gear of the second-stage transmission mechanism is an output gear.

A plurality of weight-reduction slots are provided in the gear.

All of the weight-reduction slots provided in the gear are uniformly distributed in a circumferential direction.

The electromagnet is a bi-stable electromagnet, is interference-fit, through an end cover, into a cavity provided in an MGU housing, and is positioned to correspond to one of the locking slots.

The present disclosure further provides a method for controlling a locking mechanism. During parking of a vehicle, a clamping force of a vehicle brake is first set to a first clamping force, the first clamping force being an over-target clamping force. The electromagnet is energized, the locking head extends, and then the gear is controlled to rotate until the locking head contacts the locking surface, thereby completing locking.

During parking of the vehicle, the electromagnet is energized, a first contact surface on the locking head contacts an endpoint of the non-locking surface in a target locking slot, the electromagnet is kept energized, and the gear is controlled to rotate in a first direction and is backed off until the locking head completely enters the target locking slot and a second contact surface of the locking head contacts the locking surface in the target locking slot, thereby completing a locking operation. During this process, the electromagnet is kept energized so that the locking head remains in an extended state, thereby ensuring that the locking head can automatically fit into the target locking slot.

During parking of the vehicle, the electromagnet is energized, a first contact surface on the locking head contacts the non-locking surface in a target locking slot, the electromagnet is kept energized, and the gear is controlled to rotate in a first direction and is backed off until the locking head completely enters the target locking slot and a second contact surface of the locking head contacts the locking surface in the target locking slot, thereby completing a locking operation.

During parking of the vehicle, the electromagnet is energized, the locking head is positioned at a middle position in a length direction of a target locking slot, the electromagnet is kept energized, and the gear is controlled to rotate in a first direction and is backed off until the locking head completely enters the target locking slot and a second contact surface of the locking head contacts the locking surface in the target locking slot, thereby completing a locking operation.

During parking of the vehicle, the electromagnet is energized, a distal end of the locking head is caught on an edge of the locking surface of a target locking slot, the electromagnet is kept energized, and a motor is required to control the gear to rotate in a first direction so that the gear is backed off. However, at this time the gear cannot be backed off and the motor cannot operate. Then the gear is controlled to rotate by a certain angle in a second direction, and then the gear is controlled to rotate in the first direction so that the gear is backed off until the locking head completely enters the target locking slot, thereby completing a locking operation.

During parking of the vehicle, the electromagnet is energized, the locking head abuts against a portion of the gear at which no locking slot is provided, the electromagnet is kept energized, and the gear is controlled to rotate and is backed off until the locking head completely enters a target locking slot, thereby completing a locking operation.

The present disclosure further provides a method for controlling a locking mechanism. During parking of a vehicle, a clamping force of a vehicle brake is first set to a second clamping force, the second clamping force being a relatively small clamping force. The electromagnet is energized, the locking head extends, and then the motor is controlled to drive the gear to rotate. A locking position is determined by identifying a magnitude of a current of the motor, and operation of the motor ends after the vehicle brake reaches a required target clamping force, thereby completing locking.

During parking of the vehicle, the electromagnet is energized, a first contact surface on the locking head contacts an endpoint of a non-locking surface in a first locking slot, the electromagnet is kept energized, and the motor controls the gear to rotate in a second direction so that the gear rotates to a state in which a second locking slot is aligned with the locking head. Then the motor controls the gear to rotate in a first direction so that the gear is backed off until the locking head completely enters the second locking slot, thereby completing a locking operation.

During parking of the vehicle, the electromagnet is energized, a first contact surface on the locking head contacts a non-locking surface in a first locking slot, the electromagnet is kept energized, and the motor controls the gear to rotate in a second direction. During rotation of the gear, the non-locking surface in the first locking slot pushes the locking head out of the first locking slot. After the gear rotates to a state in which a second locking slot is aligned with the locking head, the motor controls the gear to rotate in a first direction so that the gear is backed off until the locking head completely enters the second locking slot, thereby completing a locking operation.

During parking of the vehicle, the electromagnet is energized, the locking head is positioned at a middle position in a length direction of a first locking slot, the electromagnet is kept energized, and the motor controls the gear to rotate in a second direction. During rotation of the gear, when the non-locking surface in the first locking slot contacts the locking head, the non-locking surface pushes the locking head out of the first locking slot. After the gear rotates to a state in which a second locking slot is aligned with the locking head, the motor controls the gear to rotate in a first direction so that the gear is backed off until the locking head completely enters the second locking slot, thereby completing a locking operation.

During parking of the vehicle, the electromagnet is energized, a distal end of the locking head is caught on an edge of a locking surface of a first locking slot, the electromagnet is kept energized, and the motor controls the gear to rotate in a second direction. During rotation of the gear, when the non-locking surface in the first locking slot contacts the locking head, the non-locking surface pushes the locking head out of the first locking slot. After the gear rotates to a state in which a second locking slot is aligned with the locking head, the motor controls the gear to rotate in a first direction so that the gear is backed off until the locking head completely enters the second locking slot, thereby completing a locking operation.

During parking of the vehicle, the electromagnet is energized, the locking head abuts against a portion of the gear at which no locking slot is provided, the electromagnet is kept energized, and the motor controls the gear to rotate in a second direction so that the gear rotates to a state in which one of locking slots closest to the locking head is aligned with the locking head. Then the motor controls the gear to rotate in a first direction so that the gear is backed off until the locking head completely enters the one of the locking slots, thereby completing a locking operation.

The present disclosure further provides a motor gear unit including the locking mechanism.

The present disclosure further provides a vehicle including the motor gear unit.

The locking mechanism of the present disclosure can ensure effectiveness of a locking action of a bi-stable electromagnet. When the locking head enters the locking slot, an open space around the locking head does not obstruct movement of the locking head, thereby ensuring effective axial movement of the locking mechanism, allowing a detection sensor to be omitted, simplifying module components, and reducing manufacturing cost.

### BRIEF DESCRIPTION OF THE DRAWINGS

The present disclosure includes the following drawings, which illustrate the following:
FIG. 1 is a schematic structural diagram of a compound gear according to Embodiment 1;
FIG. 2 is a schematic structural diagram of a compound gear according to Embodiment 2;
FIG. 3 is a sectional schematic diagram of a motor gear unit;
FIG. 4 is an assembly schematic diagram of the compound gear and the locking mechanism;
FIG. 5 is a schematic diagram showing a state of the locking head and the locking slot in an unlocked state;
FIG. 6 is a schematic diagram showing a state of the locking head and the locking slot in a locked state;
FIG. 7 is a schematic diagram showing a state in which an endpoint of the first contact surface on the locking head contacts an endpoint of the non-locking surface in the target locking slot during simulated parking;
FIG. 8 is a schematic diagram showing a state in which the first contact surface on the locking head contacts the non-locking surface in the target locking slot during simulated parking;
FIG. 9 is a schematic diagram showing a state in which the locking head is positioned at a middle position of the locking slot during simulated parking;
FIG. 10 is a schematic diagram showing a state in which a distal end of the locking head is caught on an edge of the locking surface of the locking slot during simulated parking; and
FIG. 11 is a schematic diagram showing a state in which the locking head abuts against a non-locking-slot position of the gear during simulated parking.

Reference Numerals: 1 - compound gear; 1a - locking slot; 1a1 - locking surface; 1a2 - non-locking surface; 1b - weight-reduction slot; 2 - ECU cover; 3 - circuit board; 4 - ECU housing; 5 - output gear; 6 - electromagnet; 6a - locking head; 7 - motor gear; 8 - MGU housing; 8a - cavity; 9 - motor; and 10 - shaft pin.

### DETAILED DESCRIPTION

Specific embodiments of the present disclosure are further described in detail below with reference to the accompanying drawings by describing embodiments, so as to enable those skilled in the art to obtain a more complete, accurate, and in-depth understanding of the concept and technical solutions of the present disclosure and facilitate implementation thereof.

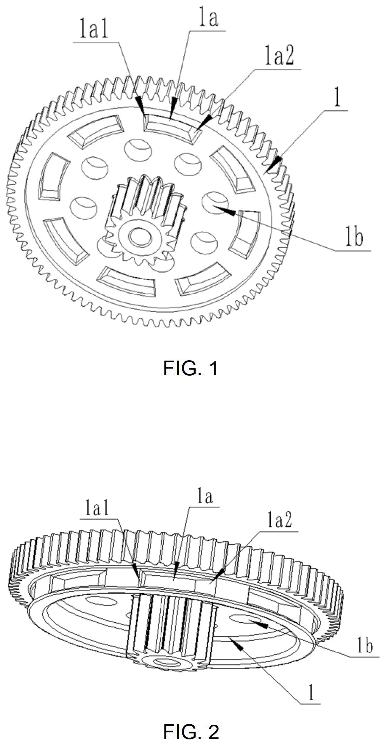

As shown in FIGs.1 to 11, the present disclosure provides a locking mechanism applicable to a vehicle brake. The locking mechanism includes an electromagnet 6 and a multi-stage gear transmission mechanism. A locking head 6a of the electromagnet 6 is configured, in a locked state, to be fitted into a locking slot 1a provided in any one gear of the multi-stage gear transmission mechanism. A locking surface 1a1 and a non-locking surface 1a2 are provided in the locking slot 1a. A distance between the locking surface 1a1 and the non-locking surface 1a2 is greater than a width of the locking head 6a.

Specifically, as shown in FIGs.1 and 2, the locking slot 1a having a certain length is arranged on any stage of gear, and the electromagnet 6, as a driving device, is arranged in a cavity 8a provided in an MGU housing 8. Extension and retraction of the locking head 6a of the electromagnet 6 cooperate with and release from the locking slot 1a on the gear, thereby implementing a parking locking function for the entire brake.

As shown in FIGs.1 and 2, the locking surface 1a1 and the non-locking surface 1a2 are provided in the locking slot 1a. The locking surface 1a1 and the non-locking surface 1a2 are inner wall surfaces at two opposite ends in a length direction of the locking slot 1a. The locking surface 1a1 is configured to contact a surface of the locking head 6a in the locked state. The non-locking surface 1a2 is configured to push the locking head 6a out of the locking slot 1a during rotation of the gear. The non-locking surface 1a2 is an inclined planar surface provided in the locking slot 1a. The non-locking surface 1a2 forms an included angle with an axis of the gear, and the included angle is an acute angle. A moving direction of the locking head 6a is parallel to the axis of the gear. A first contact surface configured to contact the non-locking surface 1a2 is provided on the locking head 6a. The first contact surface is an inclined planar surface, forms an included angle with the moving direction of the locking head 6a, and the included angle is an acute angle. An inclination angle of the first contact surface is the same as an inclination angle of the non-locking surface 1a2. The locking surface 1a1 is a planar surface parallel to the axis of the gear. A second contact surface configured to contact the locking surface 1a1 is provided on the locking head 6a. The second contact surface is a planar surface parallel to the moving direction of the locking head 6a. In the locked state, the second contact surface fits against the locking surface 1a1, and the locking head 6a circumferentially limits the gear, thereby implementing locking.

Preferably, a plurality of locking slots 1a are provided, and all of the locking slots 1a are uniformly distributed on the gear in a circumferential direction about the axis of the gear as a centerline. In the locked state, the locking head 6a is inserted into one of the locking slots 1a. A width of the locking slot 1a is greater than the width of the locking head 6a. A width direction of the locking head 6a is parallel to a width direction of the locking slot 1a, and a length direction of the locking slot 1a is perpendicular to the width direction thereof. A length and the width of the locking slot 1a are both greater than a length and the width of the locking head 6a, so that the locking head 6a is ensured to have sufficient time to completely enter the locking slot 1a. Thus, when the locking head enters the locking slot 1a, an open space around the locking head 6a does not obstruct movement of the locking head 6a, thereby ensuring effective axial movement of the locking mechanism, allowing a detection sensor to be omitted, simplifying module components, and reducing manufacturing cost.

As shown in FIGs.1 and 2, weight-reduction slots 1b are provided in the gear. A plurality of the weight-reduction slots 1b are provided, and all of the weight-reduction slots 1b provided in the gear are uniformly distributed in a circumferential direction about the axis of the gear as a centerline, thereby achieving a weight-reduction effect.

Preferably, the electromagnet 6 is a bi-stable electromagnet, is interference-fit, through an end cover, into a cavity provided in the MGU housing 8, and is positioned to correspond to the locking slot 1a.

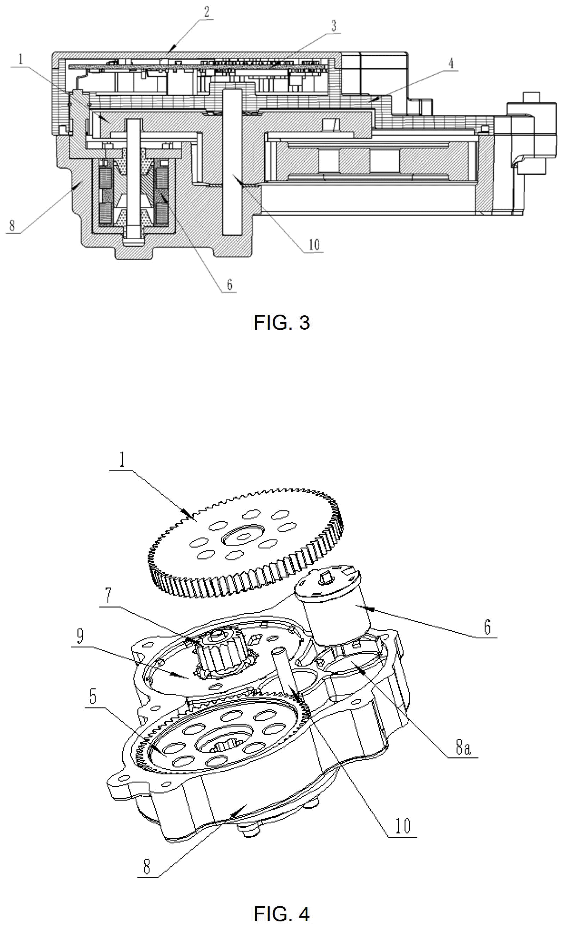

As shown in FIGs.3 to 6, the multi-stage gear transmission mechanism includes a first-stage transmission mechanism and a second-stage transmission mechanism. A driving gear of the first-stage transmission mechanism is connected to a motor, and the motor provides driving force. The locking slots 1a are provided in a driven gear of the first-stage transmission mechanism, and the driving gear and the driven gear of the first-stage transmission mechanism mesh with each other. The driven gear of the first-stage transmission mechanism is fixedly connected to a driving gear of the second-stage transmission mechanism to form the compound gear 1. A driven gear of the second-stage transmission mechanism is the output gear 5. The driven gear of the first-stage transmission mechanism meshes with the driving gear of the second-stage transmission mechanism, and the output gear 5 outputs power.

When a vehicle is parked, an over-target clamping force is first set, the electromagnet 6 is energized, the locking head 6a of the electromagnet 6 extends, and then the motor controls the compound gear 1 to rotate. The compound gear 1 is backed off until the locking head 6a contacts the locking slot 1a, and the locking head 6a is inserted into the locking slot 1a, thereby completing locking.

As a modified embodiment, when the vehicle is parked, a relatively small clamping force may first be set, the electromagnet 6 is energized, the locking head 6a extends, and then the motor is controlled to perform slow clamping. A locking position is determined by identifying the current, and operation is ended at a position satisfying the clamping force, thereby completing locking.

### Embodiment 1

As shown in FIG. 1, the driven gear of the first-stage transmission mechanism and the driving gear of the second-stage transmission mechanism are fixedly connected to form the compound gear 1. A plurality of locking slots 1a are provided on an end surface of the compound gear 1, and all of the locking slots 1a are uniformly distributed in a circumferential direction on the end surface of the gear. The end surface of the compound gear 1 is a planar surface of the compound gear 1 facing the electromagnet 6, and the end surface of the compound gear 1 is perpendicular to the axis of the compound gear 1.

In Embodiment 1, eight locking slots 1a are provided. The locking slots 1a are arc-shaped grooves, and the axis about which the locking slots 1a are distributed is coaxial with the axis of the gear. Eight weight-reduction slots 1b are also provided. The weight-reduction slots 1b and the locking slots 1a are arranged in parallel in a direction from a circle center to an outer periphery, and the weight-reduction slots 1b and the locking slots 1a are staggered in the circumferential direction. Such a design structure can increase gear strength.

### Embodiment 2

As shown in FIG. 2, the driven gear of the first-stage transmission mechanism and the driving gear of the second-stage transmission mechanism are fixedly connected to form the compound gear 1. A plurality of locking slots 1a are provided on an outer circumferential surface of the compound gear 1, and all of the locking slots 1a are uniformly distributed in a circumferential direction on the outer circumferential surface of the gear. The outer circumferential surface of the compound gear 1 is a cylindrical surface of the compound gear 1, and an axis of the outer circumferential surface of the compound gear 1 is the axis of the compound gear 1.

In Embodiment 1, the locking slots are arranged on a horizontal end surface of the gear, so the electromagnet needs to be arranged axially, and the locking mechanism forms an axially assembled configuration. In Embodiment 2, the locking slots are arranged on a peripheral vertical surface of the gear, so the electromagnet can be arranged horizontally, and the locking mechanism forms a horizontally assembled configuration. Compared with the arrangement in Embodiment 1, this arrangement can shorten an axial dimension of the entire caliper, and is therefore more widely applicable to vehicle models adapted to an EMB caliper.

In Embodiment 2, eight locking slots 1a are provided. The locking slots 1a are arc-shaped grooves, and the axis about which the locking slots 1a are distributed is coaxial with the axis of the gear. Eight weight-reduction slots 1b are also provided. The weight-reduction slots 1b and the locking slots 1a are arranged in parallel in a direction from a circle center to an outer periphery, and the weight-reduction slots 1b and the locking slots 1a are staggered in the circumferential direction. Such a design structure can increase gear strength.

### Embodiment 3

Embodiment 3 provides a motor gear unit including the locking mechanism having the above structure. As shown in FIGs.3 and 4, the motor gear unit further includes the MGU housing 8, an ECU cover 2, an ECU housing 4, a circuit board 3, and a motor. The ECU housing 4 is fixedly provided on the MGU housing 8. The ECU cover 2 is fixedly provided on the ECU housing 4. The electromagnet 6 is provided in the MGU housing 8. A motor gear 7 and the motor are axially arranged. The motor is arranged in a cavity provided in the MGU housing 8. The compound gear 1 is arranged on a shaft pin 10, and the shaft pin 10 is interference-fit on the MGU housing 8. The compound gear 1 is arranged on the shaft pin 10. The electromagnet 6 is arranged in the cavity 8a provided in the MGU housing 8. The circuit board 3 is arranged in the ECU housing 4. The electromagnet 6 and the circuit board 3 are connected through a connector.

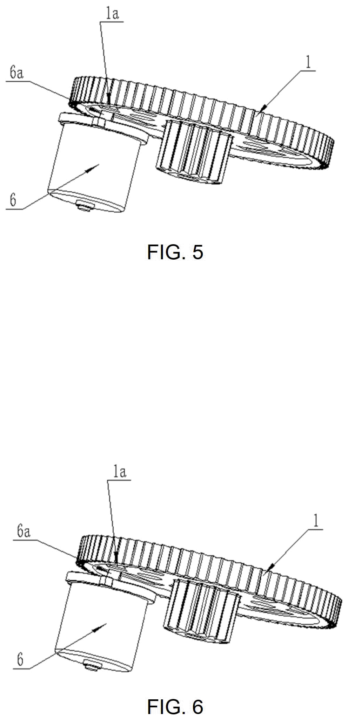

As shown in FIGs.5 and 6, when not locked, the locking head 6a is in a retracted state, and the locking head 6a and the locking slot 1a are in a decoupled state. When locked, the locking head 6a is in a pushed-out state, and the locking head 6a extends into the locking slot 1a, so that the locking head 6a and the locking slot 1a are in an engaged state, thereby completing locking.

### Embodiment 4

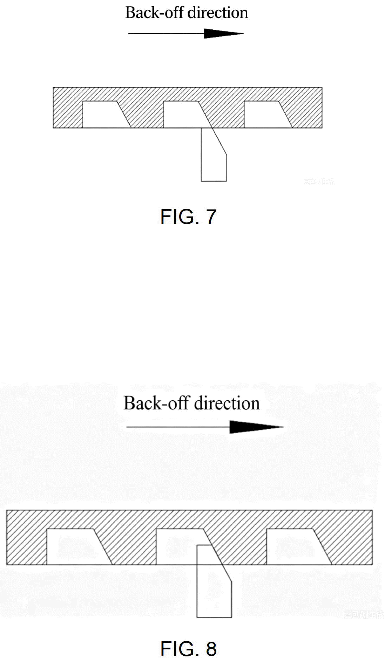

Since a state of the compound gear 1 during parking locking is random, a position of the locking slot on the compound gear 1 corresponding to the locking head 6a of the electromagnet 6 during locking is also random. There are five working conditions, respectively shown in FIGs.7 to 11.

A first method for controlling the locking mechanism is as follows. During parking of a vehicle, a clamping force of a vehicle brake is first set to a first clamping force, and the first clamping force is an over-target clamping force. During parking, a parking clamping force is a target clamping force set according to requirements, and the target clamping force is maintained for long-term parking. Because this control method adjusts positions of the locking slot and the locking head by controlling the locking gear to back off through the motor, backing off of the locking gear causes a wheel-end clamping force to decrease. Therefore, when parking starts, the first clamping force generated by the brake needs to be set greater than the target clamping force required by the brake, so that the clamping force when the gear backs off to the locked state is just within a range of the target clamping force. The electromagnet 6 is energized, the locking head 6a extends, and then the motor controls the compound gear 1 to back off until the locking head 6a contacts the locking slot, thereby completing locking. Specific execution manners are as follows.

A working process of a first working condition is as follows. As shown in FIG. 7, during parking of the vehicle, the electromagnet 6 is energized, and the first contact surface on the locking head 6a contacts an endpoint of the non-locking surface 1a2 in the target locking slot. Then, the electromagnet 6 is kept energized, and the motor controls the compound gear 1 to rotate at a low speed in the first direction. The compound gear 1 is backed off until the locking head 6a completely enters the target locking slot, and the second contact surface of the locking head 6a contacts the locking surface 1a1 in the target locking slot, thereby completing a locking operation. During this process, the electromagnet 6 is kept energized so that the locking head 6a can remain in an extended state, thereby ensuring that the locking head 6a can automatically fit into the locking slot.

A working process of a second working condition is as follows. As shown in FIG. 8, during parking of the vehicle, the electromagnet 6 is energized, and the first contact surface on the locking head 6a contacts the non-locking surface 1a2 in the target locking slot. Then, the electromagnet 6 is kept energized, and the motor controls the compound gear 1 to rotate at a low speed in the first direction. The compound gear 1 is backed off until the locking head 6a completely enters the target locking slot, and the second contact surface of the locking head 6a contacts the locking surface 1a1 in the target locking slot, thereby completing a locking operation.

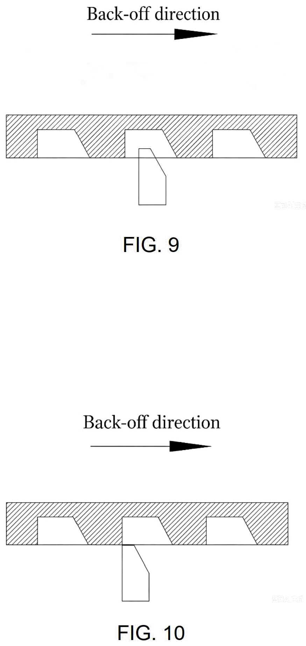

A working process of a third working condition is as follows. As shown in FIG. 9, during parking of the vehicle, the electromagnet 6 is energized, and the locking head 6a is positioned at a middle position in the length direction of the target locking slot. The electromagnet 6 is kept energized, and the motor controls the compound gear 1 to rotate at a low speed in the first direction. The compound gear 1 is backed off until the locking head 6a completely enters the target locking slot, and the second contact surface of the locking head 6a contacts the locking surface 1a1 in the target locking slot, thereby completing a locking operation.

A working process of a fourth working condition is as follows. As shown in FIG. 10, during parking of the vehicle, the electromagnet 6 is energized, and a distal end of the locking head 6a is caught on an edge of the locking surface 1a1 of the target locking slot. Then, the electromagnet 6 is kept energized, and the motor needs to control the compound gear 1 to rotate at a low speed in the first direction, so that the compound gear 1 is backed off. However, at this time the compound gear 1 cannot be backed off and the motor cannot operate. This working condition may be determined by a signal indicating that the motor cannot rotate. Then, the motor can be controlled to rotate reversely, the motor controls the compound gear 1 to rotate by a certain angle in the second direction, and then the motor controls the compound gear 1 to rotate at a low speed in the first direction. The first direction and the second direction are two opposite rotation directions; if the first direction is clockwise, the second direction is counterclockwise. The compound gear 1 is backed off until the locking head 6a completely enters the target locking slot, thereby completing a locking operation. In this working condition, when the locking head 6a of the electromagnet 6 abuts against the edge of the locking surface 1a1 of the target locking slot, although the second contact surface contacts the locking surface 1a1, an insertion depth may be insufficient or jamming may occur. Thus, the gear cannot move, and the compound gear 1 cannot be backed off. Therefore, the motor needs to be controlled to rotate reversely first.

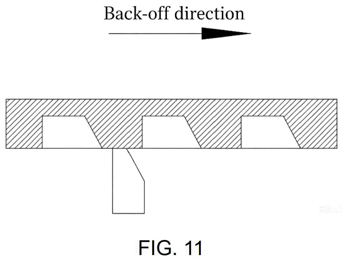

A working process of a fifth working condition is as follows. As shown in FIG. 11, during parking of the vehicle, the electromagnet 6 is energized, and the locking head 6a abuts against a portion of the gear at which no locking slot is provided. Then, the electromagnet 6 is kept energized, and the motor controls the compound gear 1 to rotate at a low speed. The compound gear 1 is backed off until the locking head 6a completely enters the target locking slot, thereby completing a locking operation.

### Embodiment 5

A second method for controlling the locking mechanism is as follows. During parking of a vehicle, a clamping force of a vehicle brake is first set to a second clamping force, the second clamping force is a relatively small clamping force, and the second clamping force is less than a target clamping force required by the vehicle brake. The electromagnet 6 is energized, the locking head 6a extends, and then the motor is controlled to rotate slowly. A locking position is determined by identifying a current of the motor, and operation of the motor ends after the vehicle brake reaches the required target clamping force, thereby completing locking. Specific execution manners are as follows.

A working process of a first working condition is as follows. During parking of the vehicle, the electromagnet 6 is energized, and the first contact surface on the locking head 6a contacts an endpoint of the non-locking surface 1a2 in a first locking slot. Then, the electromagnet 6 is kept energized, and the motor controls the compound gear 1 to rotate at a low speed in the second direction, so that the compound gear 1 rotates to a state in which a second locking slot is aligned with the locking head 6a. Then the motor controls the compound gear 1 to rotate at a low speed in the first direction. The first direction and the second direction are two opposite rotation directions; if the first direction is clockwise, the second direction is counterclockwise. When the motor controls the compound gear 1 to rotate in the second direction, a re-clamping process of the brake can be implemented. The compound gear 1 is backed off until the locking head 6a completely enters the second locking slot, thereby completing a locking operation. The first locking slot and the second locking slot are two circumferentially adjacent locking slots on the compound gear 1.

A working process of a second working condition is as follows. During parking of the vehicle, the electromagnet 6 is energized, and the first contact surface on the locking head 6a contacts the non-locking surface 1a2 in the first locking slot. Then, the electromagnet 6 is kept energized, and the motor controls the compound gear 1 to rotate at a low speed in the second direction. During rotation of the compound gear 1, the non-locking surface 1a2 in the first locking slot pushes the locking head 6a out of the first locking slot. After the compound gear 1 rotates to a state in which the second locking slot is aligned with the locking head 6a, the motor controls the compound gear 1 to rotate at a low speed in the first direction so that the compound gear 1 is backed off until the locking head 6a completely enters the second locking slot, thereby completing a locking operation. The first locking slot and the second locking slot are two circumferentially adjacent locking slots on the compound gear 1.

A working process of a third working condition is as follows. During parking of the vehicle, the electromagnet 6 is energized, and the locking head 6a is positioned at a middle position in the length direction of the first locking slot. Then, the electromagnet 6 is kept energized, and the motor controls the compound gear 1 to rotate at a low speed in the second direction. During rotation of the compound gear 1, when the non-locking surface 1a2 in the first locking slot contacts the locking head 6a, the non-locking surface 1a2 pushes the locking head 6a out of the first locking slot. After the compound gear 1 rotates to a state in which the second locking slot is aligned with the locking head 6a, the motor controls the compound gear 1 to rotate at a low speed in the first direction so that the compound gear 1 is backed off until the locking head 6a completely enters the second locking slot, thereby completing a locking operation. The first locking slot and the second locking slot are two circumferentially adjacent locking slots on the compound gear 1.

A working process of a fourth working condition is as follows. During parking of the vehicle, the electromagnet 6 is energized, and a distal end of the locking head 6a is caught on an edge of the locking surface 1a1 of the first locking slot. Then, the electromagnet 6 is kept energized, and the motor controls the compound gear 1 to rotate at a low speed in the second direction. During rotation of the compound gear 1, when the non-locking surface 1a2 in the first locking slot contacts the locking head 6a, the non-locking surface 1a2 pushes the locking head 6a out of the first locking slot. After the compound gear 1 rotates to a state in which the second locking slot is aligned with the locking head 6a, the motor controls the compound gear 1 to rotate at a low speed in the first direction so that the compound gear 1 is backed off until the locking head 6a completely enters the second locking slot, thereby completing a locking operation. The first locking slot and the second locking slot are two circumferentially adjacent locking slots on the compound gear 1.

A working process of a fifth working condition is as follows. During parking of the vehicle, the electromagnet 6 is energized, and the locking head 6a abuts against a portion of the gear at which no locking slot is provided. Then, the electromagnet 6 is kept energized, and the motor controls the compound gear 1 to rotate at a low speed in the second direction, so that the compound gear 1 rotates to a state in which a locking slot closest to the locking head 6a is aligned with the locking head 6a. Then the motor controls the compound gear 1 to rotate at a low speed in the first direction so that the compound gear 1 is backed off until the locking head 6a completely enters the locking slot, thereby completing a locking operation.

The present disclosure has been exemplarily described above with reference to the accompanying drawings. Obviously, specific implementation of the present disclosure is not limited to the above embodiments. Various non-substantive improvements made by using the method concept and technical solutions of the present disclosure, or direct application of the above concept and technical solutions of the present disclosure to other occasions without improvement, shall fall within the scope of the present disclosure.

## Claims

1. A locking mechanism, comprising an electromagnet and a multi-stage gear transmission mechanism, wherein a locking head of the electromagnet is configured, in a locked state, to be fitted into one of locking slots provided in any one gear of the multi-stage gear transmission mechanism, each of the locking slots is provided with a locking surface and a non-locking surface, and a distance between the locking surface and the non-locking surface is greater than a width of the locking head.

2. The locking mechanism according to claim 1, wherein the locking head is provided with a first contact surface configured to contact the non-locking surface and a second contact surface configured to contact the locking surface, and wherein, in the locked state, the second contact surface remains in contact with the locking surface.

3. The locking mechanism according to claim 1, wherein a first contact surface on the locking head and the non-locking surface of each of the locking slots are configured for matching planar contact and/or matching inclined-surface contact.

4. The locking mechanism according to any one of claims 1 to 3, wherein the locking slots are provided on an end surface of the gear, and all of the locking slots are uniformly distributed in a circumferential direction on the end surface of the gear.

5. The locking mechanism according to any one of claims 1 to 3, wherein the locking slots are provided on an outer circumferential surface of the gear, and all of the locking slots are uniformly distributed in a circumferential direction on the outer circumferential surface of the gear.

6. The locking mechanism according to any one of claims 1 to 3, wherein the gear is a driven gear of a first-stage transmission mechanism in the multi-stage gear transmission mechanism.

7. The locking mechanism according to claim 6, wherein the multi-stage gear transmission mechanism comprises the first-stage transmission mechanism and a second-stage transmission mechanism, a driving gear of the first-stage transmission mechanism is connected to a motor, the driven gear of the first-stage transmission mechanism is connected to a driving gear of the second-stage transmission mechanism to form a compound gear, and a driven gear of the second-stage transmission mechanism is an output gear.

8. The locking mechanism according to any one of claims 1 to 3, wherein a plurality of weight-reduction slots are provided in the gear.

9. The locking mechanism according to claim 8, wherein all of the weight-reduction slots provided in the gear are uniformly distributed in a circumferential direction.

10. The locking mechanism according to any one of claims 1 to 3, wherein the electromagnet is a bi-stable electromagnet, is interference-fit into a cavity provided in an MGU housing through an end cover, and is positioned to correspond to one of the locking slots.

11. A method for controlling the locking mechanism according to any one of claims 1 to 10, comprising: during parking of a vehicle, setting a clamping force of a vehicle brake to a first clamping force, the first clamping force being an over-target clamping force; energizing the electromagnet so that the locking head extends; and then controlling the gear to rotate until the locking head contacts the locking surface, thereby completing locking.

12. The method for controlling the locking mechanism according to claim 11, wherein, during parking of the vehicle, the electromagnet is energized, a first contact surface on the locking head contacts an endpoint of the non-locking surface in a target locking slot, the electromagnet is kept energized, and the gear is controlled to rotate in a first direction and is backed off until the locking head completely enters the target locking slot and a second contact surface of the locking head contacts the locking surface in the target locking slot, thereby completing a locking operation; and wherein, during this process, the electromagnet is kept energized so that the locking head remains in an extended state, thereby ensuring that the locking head can automatically fit into the target locking slot.

13. The method for controlling the locking mechanism according to claim 11, wherein, during parking of the vehicle, the electromagnet is energized, a first contact surface on the locking head contacts the non-locking surface in a target locking slot, the electromagnet is kept energized, and the gear is controlled to rotate in a first direction and is backed off until the locking head completely enters the target locking slot and a second contact surface of the locking head contacts the locking surface in the target locking slot, thereby completing a locking operation.

14. The method for controlling the locking mechanism according to claim 11, wherein, during parking of the vehicle, the electromagnet is energized, the locking head is positioned at a middle position in a length direction of a target locking slot, the electromagnet is kept energized, and the gear is controlled to rotate in a first direction and is backed off until the locking head completely enters the target locking slot and a second contact surface of the locking head contacts the locking surface in the target locking slot, thereby completing a locking operation.

15. The method for controlling the locking mechanism according to claim 11, wherein, during parking of the vehicle, the electromagnet is energized, a distal end of the locking head is caught on an edge of the locking surface of a target locking slot, the electromagnet is kept energized, and a motor is required to control the gear to rotate in a first direction so that the gear is backed off, but at this time the gear cannot be backed off and the motor cannot operate; then the gear is controlled to rotate by a certain angle in a second direction, and then the gear is controlled to rotate in the first direction so that the gear is backed off until the locking head completely enters the target locking slot, thereby completing a locking operation.

16. The method for controlling the locking mechanism according to claim 11, wherein, during parking of the vehicle, the electromagnet is energized, the locking head abuts against a portion of the gear at which no locking slot is provided, the electromagnet is kept energized, and the gear is controlled to rotate and is backed off until the locking head completely enters a target locking slot, thereby completing a locking operation.

17. A method for controlling the locking mechanism according to any one of claims 1 to 10, comprising: during parking of a vehicle, setting a clamping force of a vehicle brake to a second clamping force; energizing the electromagnet so that the locking head extends; and then controlling a motor to drive the gear to rotate, determining a locking position by identifying a magnitude of a current of the motor, and ending operation of the motor after the vehicle brake reaches a required target clamping force, thereby completing locking.

18. The method for controlling the locking mechanism according to claim 17, wherein, during parking of the vehicle, the electromagnet is energized, a first contact surface on the locking head contacts an endpoint of a non-locking surface in a first locking slot, the electromagnet is kept energized, and the motor controls the gear to rotate in a second direction so that the gear rotates to a state in which a second locking slot is aligned with the locking head; and then the motor controls the gear to rotate in a first direction so that the gear is backed off until the locking head completely enters the second locking slot, thereby completing a locking operation.

19. The method for controlling the locking mechanism according to claim 17, wherein, during parking of the vehicle, the electromagnet is energized, a first contact surface on the locking head contacts a non-locking surface in a first locking slot, the electromagnet is kept energized, and the motor controls the gear to rotate in a second direction; during rotation of the gear, the non-locking surface in the first locking slot pushes the locking head out of the first locking slot; and after the gear rotates to a state in which a second locking slot is aligned with the locking head, the motor controls the gear to rotate in a first direction so that the gear is backed off until the locking head completely enters the second locking slot, thereby completing a locking operation.

20. The method for controlling the locking mechanism according to claim 17, wherein, during parking of the vehicle, the electromagnet is energized, the locking head is positioned at a middle position in a length direction of a first locking slot, the electromagnet is kept energized, and the motor controls the gear to rotate in a second direction; during rotation of the gear, when the non-locking surface in the first locking slot contacts the locking head, the non-locking surface pushes the locking head out of the first locking slot; and after the gear rotates to a state in which a second locking slot is aligned with the locking head, the motor controls the gear to rotate in a first direction so that the gear is backed off until the locking head completely enters the second locking slot, thereby completing a locking operation.

21. The method for controlling the locking mechanism according to claim 17, wherein, during parking of the vehicle, the electromagnet is energized, a distal end of the locking head is caught on an edge of a locking surface of a first locking slot, the electromagnet is kept energized, and the motor controls the gear to rotate in a second direction; during rotation of the gear, when the non-locking surface in the first locking slot contacts the locking head, the non-locking surface pushes the locking head out of the first locking slot; and after the gear rotates to a state in which a second locking slot is aligned with the locking head, the motor controls the gear to rotate in a first direction so that the gear is backed off until the locking head completely enters the second locking slot, thereby completing a locking operation.

22. The method for controlling the locking mechanism according to claim 17, wherein, during parking of the vehicle, the electromagnet is energized, the locking head abuts against a portion of the gear at which no locking slot is provided, the electromagnet is kept energized, and the motor controls the gear to rotate in a second direction so that the gear rotates to a state in which one of locking slots closest to the locking head is aligned with the locking head; and then the motor controls the gear to rotate in a first direction so that the gear is backed off until the locking head completely enters the one of the locking slots, thereby completing a locking operation.

23. A motor gear unit, comprising the locking mechanism according to any one of claims 1 to 10.

24. A vehicle, comprising the motor gear unit according to claim 23.
